# EUROPEAN PATENT APPLICATION

(11) **EP 4 560 087 A1**
(43) Date of publication of application: **28.05.2025**
(21) Application number: 23212846.2
(22) Date of filing: 29.11.2023
(51) Int. Cl.: E04C 2/288, B32B 1/00, B32B 3/08, B32B 5/18, B32B 7/12, E04C 2/296, E04B 2/00, E04C 2/52, E04C 2/00

(54) **STRUCTURAL INSULATED PANEL**

(30) Priority: 27.11.2023 LT 2023544
(71) Applicant: UAB Mados, 47166 Kaunas (LT)
(72) Inventor: Jarusevicius, Mantas, Akademija, Kaunas distr. (LT)
(74) Representative: AAA Law

(57) **Abstract**

A sealed and hermetic structural insulated panel comprising a first cement-particle panel (1.1), a second cement-particle panel (1.2) and a layer of polystyrene foam thermal insulation material (3) interposed therebetween, a natural stone finish panel (4) on the second cement-particle panel (1.2) is disclosed. The natural stone finish panel (4) includes a surface for attaching vacuum suction holders of the lifting equipment. Also disclosed is a method of manufacturing a structural insulated panel comprising forming a frameless structure from a first cement-particle panels (1.1), polystyrene foam layer (3), second cement-particles panels (1.2), polyurethane adhesive layers (2.1, 2.2, 2.3) and stone finishing panels (4). The use of structural insulated panels for building construction is also disclosed. Application involves mounting the panels to a wooden frame with glue, mechanically pressing them into place and mechanically tightening them using vacuum suction mounts.

## Description

### Technical field

The invention relates to methods of manufacturing structural insulated building panels and houses build from these panels, more specifically pre-assembled multi-layered structural insulated panels manufactured in a factory to build houses on sight and to a method of manufacturing them.

### Background art

Buildings and their construction together consume 36% of the world's energy and 39% of energy-related carbon dioxide emissions each year. The building sector in Europe consumes about 40% of total energy consumption and 10% of total CO2 emissions. For these reasons, it is very relevant to improve building technologies and to choose building materials more carefully. Modular construction, which offers homes that can be assembled extremely quickly on-site using barriers such as structural insulation panels, is one way to reduce energy costs and the amount of CO2 generated.

The energy efficiency of the building is a combination of thermal insulation and building air tightness that helps keep heat in or out (depending on the climate) and prevents heat loss into or out of the building, reducing energy consumption to maintain the desired temperature inside.

Known technologies for making building panels usually include two outer panels, a layer of insulation between them and membranes (internal and external). Membranes for moisture control and sealing procedure usually include materials such as adhesive tapes, films, additional thermal insulation layers and mastics or silicone sealants. All of these materials can fail over time or in extreme weather conditions and be poorly installed and therefore not perform their intended function.

Furthermore, the production of modular houses generates a large amount of construction waste. This is because the nomenclature dimensions of the building materials used for the modules (panels, thermal insulation materials, etc.) they are not taken into account when designing these houses.

Standard panel technology involves using wood or metal to form the frame. The frame that holds the panels in place and the outer panels attached to it are secured with screws, nails and glue where necessary.

European patent EP3218555 discloses building panels for the construction of one or more storey houses or commercial buildings. The panel, a rectangular structural insulated panel, is made from a pair of separated outer panels, an inner insulating core and a low-profile peripheral outer rigid frame. The frame is preferably made of metal and extends around the entire periphery of the outer panels, and the insulating core has spaced gaps which also extend around the entire periphery of the panel. The main disadvantage of such a panel is the frame construction.

The invention does not have the above disadvantages and includes additional advantages.

### Brief description of the invention

According to one aspect of the invention, a structural insulated panel is disclosed. The structural insulated panel comprises a first cement - particle panel, a second cement - particle panel, and a layer of polystyrene foam thermal insulation material placed between the two panels. Adhesive layers are placed between the first panel and the layer of heat-insulating material and between the second panel and the thermal-insulating material. The structural insulated panel is a sealed and hermetic final construction element that cannot be modified on the construction site. The second cement - particle panel additionally is covered from outside with a natural stone finish panel that additionally provides a more suitable surface for attaching vacuum suction devices for lifting the panels.

According to second aspect of the invention, a method of manufacturing a structural insulated panel is disclosed. The production method comprises assembling a frameless structure from the first cement - particle panel, the polystyrene foam layer, the second cement - particles panel, the polyurethane adhesive layers and the stone finishing panel. Gluing of all the elements of the structural insulated panel is done by a machine, where the glue is distributed evenly over the surfaces, each element to be glued is pressed against each other with equal force, over the entire pressed surface of the elements to be bonded equally all over the surface. The structural insulated panel is manufactured according to predetermined dimensions as a sealed and hermetic finished construction element. The structural insulated panel is manufactured in a controlled environment, according to the ISO 9001 standard and *the LEAN* system.

According to third aspect of the invention, the use of structural insulated panels for building construction is disclosed. Application involves mounting the panels on a wooden frame with glue, mechanically pressing them into place and mechanically tightening them using vacuum suction mounts. During installation, a waterproofing membrane is placed on the foundation of the building and an impregnated wooden panel is installed on top of which additional impregnated wooden panels are installed. The lower panel of the above panels has width of the structural insulated panel, and the upper panel has width of the foamed polystyrene layer (3) of the structural insulated panel. The cement - particle panel and the panel with stone finishing are mounted, compressed and brought together at their joints so that the gaps between them are airtight and are filled with polyurethane glue, the excess of which is removed after the glue has hardened.

Structural insulated panels are a natural choice for building sustainable and maximum efficiency houses - the panels are installed quickly and allow for quick volume assembly and do not leave debris on the construction site, thus ensuring efficient use of the construction site.

### Brief description of the drawings

The features of an invention that are novel and non-obvious are given in the definition clauses. However, the invention may be best understood with reference to the following detailed description of the invention, in which, without limiting the scope of the invention, exemplary embodiments of the invention are described in conjunction with the accompanying drawings in which:

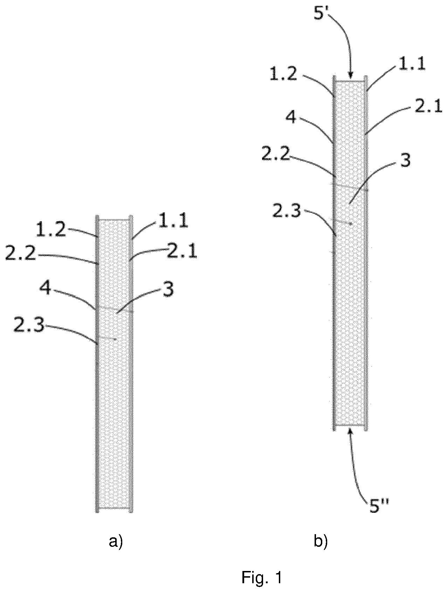

Fig. 1 shows the structural insulated panel a) from back, b) from above.

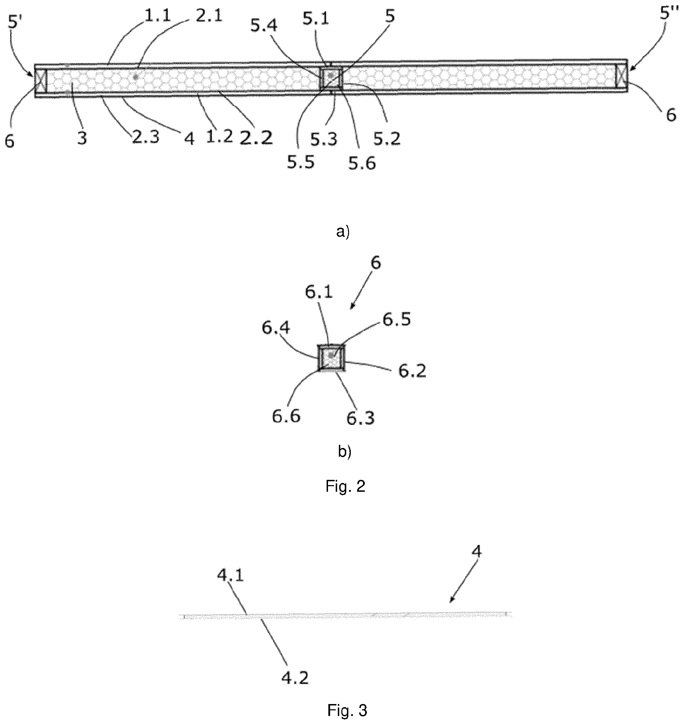

Fig. 2 shows the structural insulated panel a) with inserts, where b) is an edge insert.
Fig. 3 shows a natural stone finish panel.

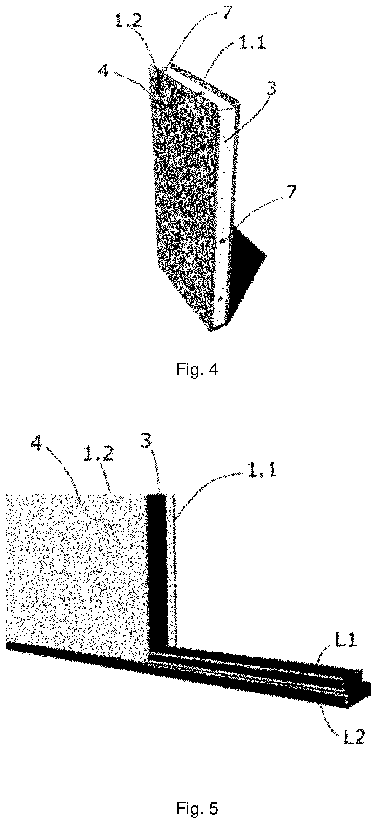

Fig. 4 shows a structural insulated panel with a fire-resistant case / hose placed for electrical wiring.
Fig. 5 shows a structural insulated panel with a continuous construction element inserted into the U-profile and a continuous construction element glued over the entire width of the edge of the panel.
Fig. 6 shows a table of parameters for an example of a structural insulated panel is shown.

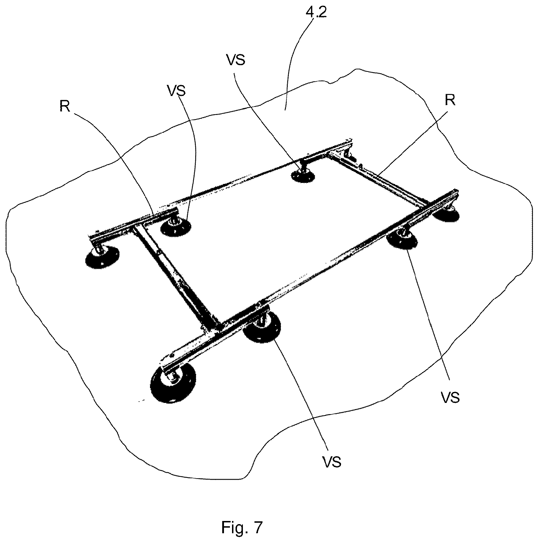

Fig. 7 shows an example of a structural insulated panel lifting device on a natural stone slab, including a frame and vacuum suction cups.

Preferred embodiments of the invention are described below with reference to the drawings. Each figure contains the same numbering of the same or equivalent item.

### Detailed description of the implementation of the invention

It should be understood that numerous specific details are set forth in order to provide a complete and comprehensible description of an exemplary embodiment of the invention. However, it will be clear to one skilled in the construction that the detail of the exemplary embodiments of the invention is not intended to limit the implementation of the invention, which may be implemented without such specific instructions. Well-known methods, procedures, and components have not been described in detail in order not to confuse the exemplary embodiments of the invention. Further, this description should not be construed as limiting the exemplary embodiments provided, but only as an embodiment thereof.

### Terms used in the description:

### Structural insulated panel or SIP panel.

The structural insulated panel according to the invention comprises a first cement - particle panel (1.1), a first polyurethane adhesive layer (2.1), a polystyrene foam layer (3), a second polyurethane adhesive layer (2.2), a second cement - particle panel (1.2), a third polyurethane adhesive layer (2.3), a natural stone finishing panel (4). The natural stone finish panel (4) may comprise a protective, peelable film on the outer surface, where the outer surface is intended for mounting vacuum suction cups (VS).

Polyurethane glue layer (2.1, 2.2) between each cement - particle panel (1.1, 1.2) and polystyrene foam layer (3) is distributed over the entire area of contact between each cement - particle panel (1.1, 1.2) and polystyrene foam layer (3). Between the second cement - particle panel (1.2) and the natural stone finishing panel (4), the polyurethane glue layer (2.3) is distributed over the entire area of contact between the second cement - particle panel (1.2) and the natural stone finishing panel (4). The structural insulated panel may also comprise at least one insert (5) located between ends (5', 5") of the structural insulated panel.

The structural insulated panel may also comprise end inserts (6) located at the ends (5', 5") of the structural insulated panel.

The structural insulated panel in the polystyrene foam layer (3) may also comprise at least one fire resistant hose (7) installed inside for the electric wire to push through the wall.

The structural insulated panel in the first cement - particle panel (1.1) may also comprise formed cavities for accommodating finishing elements, electrical installation elements, plumbing elements.

The structural insulated panel also comprises an adhesive layer on top surface of the polystyrene foam layer (3), sealing the top surface of the structural insulated panel. The upper surface of the polystyrene foam layer (3) forms a U-shaped profile with the ends of the cement - particle panels (1.1, 1.2). The structural insulated panel also comprises an adhesive layer on bottom surface of the polystyrene foam layer (3), sealing the bottom surface of the structural insulated panel. The lower surface of the polystyrene foam layer (3) forms a U-shaped profile with the ends of the cement - particle panels (1.1, 1.2).

Each of the aforementioned inserts (5, 6) extends over the entire height of the structural insulated panel from the lower surface of the polystyrene foam layer (3) to the upper surface of the polystyrene foam layer (3).

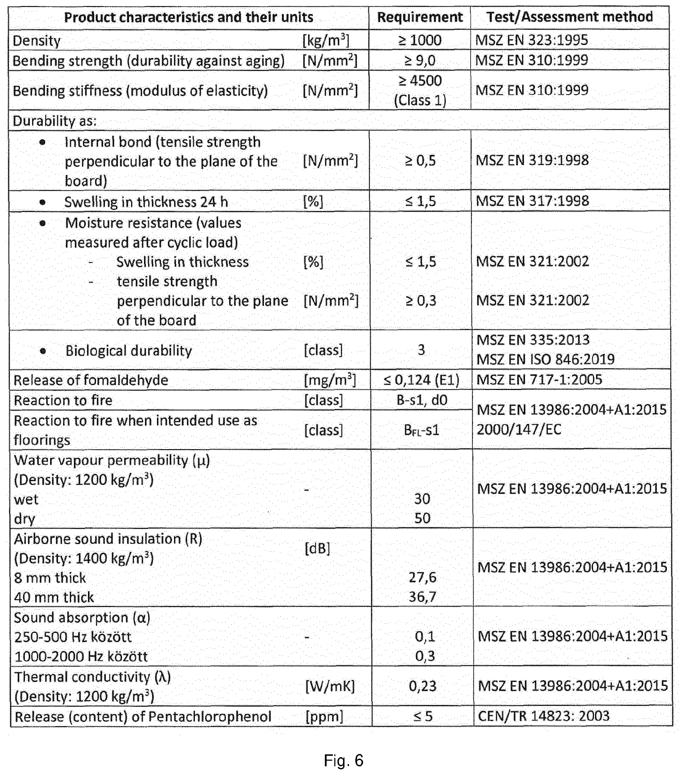

Cement - particle panels are typical construction panels formed from mixture of cement, water and wood particles. Typical characteristics of cement - particle panel are presented in the table, Figure 6.

The bottom of the structural insulated panel, intended to be placed on a base such as a building foundation, and the top, on which the following structural insulated panel according to the invention or overlay can be installed, are formed so that the layer of polystyrene foam (3), both at the bottom and at the top, together with the ends of the cement - particle panels (1.1, 1.2) would form a U-shaped profile into which the continuous construction elements (L1) could be inserted, which would be glued to the lower and upper surfaces of the polystyrene foam layer (3) and the sticking out cement - particle panels (1.1, 1.2) respectively of the inner surfaces of the edges, at the bottom and top of the structural insulated panel.

The at least one insert (5) between the structural isolated shield ends (5', 5") preferably include a first panel (5.1), a second panel (5.2), a third panel (5.3), a fourth panel (5.4) and a core (5.5). The mentioned panels (5.1, 5.2, 5.3, 5.4) are glued to each other at the edges with glue, for example polyurethane glue, limiting gaps (5.6) on the four edges, in which the core (5.5) is inserted, for example made of polystyrene foam. Between each panel (5.1, 5.2, 5.3, 5.4) and the core (5.5) a layer of polyurethane glue is distributed. The polyurethane adhesive layer is preferably distributed over the entire area where the edges of the said panels (5.1, 5.2, 5.3, 5.4) and the core (5.5) are in contact. The mentioned panels (5.1, 5.2, 5.3, 5.4) are, for example, cement - particle panels. Otherwise, the mentioned panels (5.1, 5.2, 5.3, 5.4) are wood particle panels.

Said at least one insert (5) between the first cement - particle panel (1.1) of the structural insulated panel and the first panel (5.1) of the insert comprises a layer of polyurethane adhesive that covers the entire interface between the first cement - particle panel (1.1) and the first panel (5.1) of the insert surface area. Said at least one insert (5) between the second cement - particle panel (1.2) of the structural insulated panel and the third panel (5.3) of the insert comprises a layer of polyurethane adhesive that covers the entire interface between the second cement - particle panel (1.2) and the third panel (5.3) of the insert surface area. In this way, the structural insulated panel is reinforced by connecting the first cement - particle panel (1.1) of the structural insulated panel with the second cement - particle panel (1.2) of the structural insulated panel. The mentioned connection essentially reduces the thermal bridge or does not create conditions for the formation of a thermal bridge, because the structure of the insert is made of thermal insulation materials that reduce or avoid the occurrence of a thermal bridge.

Said at least one insert (5) may be fully wooden, on the sides in contact with the panel's first cement - particle panel (1.1) and the panel's second cement - particle panel (1.2), comprising an adhesive layer for gluing the insert to the panel's first cement - particle panel (1.1) and the panel's second cement - particle panel (1.2).

Each said end insert (6) includes a first panel (6.1), a second panel (6.2), a third panel (6.3), a fourth panel (6.4) and a core (6.5). The mentioned panels (6.1, 6.2, 6.3, 6.4) are glued together at the edges with glue, for example polyurethane glue, limiting the cavity (6.6) on the four edges, in which the core (6.5) is inserted, for example made of polystyrene foam. Between each panel (6.1, 6.2, 6.3, 6.4) and the core (6.5) a layer of polyurethane glue is distributed. The polyurethane adhesive layer is preferably distributed over the entire area where the edges of the said panels (6.1, 6.2, 6.3, 6.4) and the core (6.5) are in contact. The mentioned panels (6.1, 6.2, 6.3, 6.4) are, for example, cement - particle panels. Otherwise, the mentioned panels (6.1, 6.2, 6.3, 6.4) are wood particle panels.

Each said end insert (6) between the first cement - particle panel (1.1) of the structural insulated panel and the first panel of the end insert (6.1) includes a layer of polyurethane adhesive that covers the entire interface between the first cement - particle panel (1.1) and the first panel of the end insert (6.1) surface area. Said at least one insert between the second cement - particle panel (1.2) of the structural insulated panel and the third panel (6.3) of the back insert comprises a layer of polyurethane adhesive that covers the entire interface between the second cement - particle panel (1.2) and the third panel (6.3) of the rear insert. surface area. In this way, the structural insulated panel is strengthened by mutually connecting the first cement - particle panel (1.1) of the structural insulated panel with the second cement - particle panel (1.2) of the structural insulated panel at their ends (5', 5"). The mentioned connection essentially reduces the thermal bridge or does not create conditions for the formation of a thermal bridge, because the structure of the insert is made of thermal insulation materials that reduce or avoid the occurrence of a thermal bridge.

Each of said end inserts (6) may be fully wooden, on the sides in contact with the panel's first cement - particle panel (1.1) and the panel's second cement - particle panel (1.2), including an adhesive layer for gluing the insert to the panel's first cement - particle panel (1.1) and the panel's second cement - particle panel (1.2).

The ends (5', 5") of the structural insulated panel are sealed with a layer of polyurethane glue, covering the surfaces of the polystyrene foam (3) of the U-shaped profiles formed at the ends. The ends (5', 5") of the structural insulated panel can be formed so that there is a smooth surface along the entire length of the ends (5', 5") for gluing to the ends (5', 5 ") of other structural insulated panels of the same design, forming the walls of the house, or to be finite. In this way, no additional elements are used to connect the panels together. The smooth surface is formed by the end inserts (6), glued at the ends (5', 5") of the structural insulated panel, into the U-shaped profiles formed at the ends (5', 5"), which are formed between the sealed polystyrene foam layer (3) side surfaces and sticking out edges of cement - particle panels (1.1, 1.2).

The structural insulated panel can comprise 100% of the structural inserts (5, 6) used between the first and second panels (1.1, 1.2) made of the same materials as the first and second panels (1.1, 1.2) and the polystyrene foam layer (3). The structural insulated panel may include 50% of the structural inserts (5, 6) between the first and second panels (1.1, 1.2) made of the same materials as the first and second panels (1.1, 1.2) and a polystyrene foam layer (3), and 50% of the structural inserts (5, 6) made of wood or other building material with similar or better mechanical properties and a polystyrene foam layer (3).

The polystyrene foam layer (3) is preferably 25 cm thick for external (outdoor) walls and 10 cm thick for internal building walls (partitions), and includes graphite in its composition. The polystyrene foam is, for example, 95% air and 5% polyester. Polystyrene foam with such a structure withstands the loads that occur in building construction, so there is no need to thicken the walls of buildings.

The second cement - particle panel (1.2) together with the natural stone finishing panel (4) glued to it isolates the structural insulated polystyrene foam layer (3) and the inserts (5, 6) from environmental influences: moisture, wind, sun, rodents.

The stone finish panel (4) comprises a first surface (4.1) for bonding to the second cement - particle panel (1.2). Between the first surface (4.1) and the second cement - particle panel (1.2), the polyurethane adhesive is distributed evenly over the entire area of interaction between the two surfaces of the two panels (1.2, 4), forming a single element from the second cement - particle panel (1.2), a layer of polyurethane glue, and the stone finishing panel (4). The mentioned first surface (4.1) is evenly covered with glue and after applying the next material, it is pressed in a press and at a room temperature of about + 18 C °per hour, the glue fully hardens and it is no longer possible to separate the materials. The stone finishing panel (4) also comprises a second surface (4.2), which forms the outer surface of the structural insulated panel interacting with the elements of environmental impact: moisture, wind, sun, rodents. Mentioned second surface (4.2) is a particularly flat surface for attaching the vacuum suction holders of lifting devices. Mentioned second surface (4.2) also preferably includes a protective peelable PVC film, for example 0.2mm thick, which is adhered to the second surface (4.2) of the stone finish panel (4).

All elements of the structural insulated panel are glued with polyurethane glue and only with a machine. The glue is distributed evenly over the surfaces, pressing each element to be glued with equal force to each other over the entire pressed surface of the elements to be glued ensures high-quality adhesion and durability of the elements to be glued.

When covering with glue the sides of cement - particle panels (1.1, 1.2) and the parts (5.1, 5.2, 5.3, 5.4, 5.5, 6.1, 6.2, 6.3, 6.4, 6.5) of the inserts (5, 6) in the full area, the inserts (5, 6) with glue serves as an additional hermetic connection connecting the cement - particle panels (1.1, 1.2) and ensures the distribution of loads, in the vertical direction, across all the panels evenly and at each joint of the panels, which increases the load-bearing capacity and stability of the structural insulated panel.

Polyurethane adhesives are, for example, those with: density 1.1 kg/dm3; flow rate about 4000 mPas; shear strength SS-SS 6N/mm2; Al-Al 4 N/mm2; yield 150-300 g/m2; gluing by pressing is carried out for 30 minutes at 23 C and ambient 50% relative humidity, and 20 minutes by pressing and spraying with water 5-10 g/m2.

The first cement particle panel (1.1) on the surface opposite to the surface to which the polystyrene foam layer (3) is glued preferably includes a protective peelable PVC film, for example 0.2 mm thick, which is glued to said first cement particle panel (1.1) surface.

The mentioned protective PVC film makes it possible to remove excess glue from the second surface (4.2) of the stone finishing panel and the first surface of the cement - particle panel (1.2) in such a way that the said surfaces are not damaged by tools for removing hardened glue, if protective films were not used.

In a structural insulated panel, using two extremely strong cement - particle panels (1.1, 1.2) and reinforcing them through an insert of polystyrene foam (3), the panels (1.1, 1.2) with the same physical properties cannot distort, because the opposite panel performs a tensioning function. When gluing cement particle panels (1.1, 1.2) in a press, where there is an extremely smooth surface and the press presses evenly over the entire width of the panel, it is ensured that the structural insulated panels will be extremely smooth after the glue hardens and there will be no deformations or defects after adding the spirit level. With an extremely smooth and straight surface, the natural stone finish panel (4) is glued and adheres evenly, which ensures the durability of the finish. The thickness of the stone finishing panel (4) is preferably 2 mm.

The dimensions of a fully assembled structural insulated panel can be 277x1200x3000mm, and the weight can reach 178 kg and more. As the structural insulated panel is completely manufactured in the factory and is no longer modified on site, it does not have any non-permanent or permanent fixing points for hooking up lifting equipment, not to damage the facades of the panel. The transportation of the structural insulated panel is carried out by lifting devices comprising vacuum pumps (VS), where the mentioned lifting devices are attached to the second surface (4.2) of the stone finishing panel (4) for the lifting, transportation and installation at the construction site.

The structural insulated panel lifting device is, for example, comprising a frame (R) and vacuum suction cups (VS) connected to each other by said frame, or comprising single vacuum suction holders (VS) which are connected by rigid connections. Said lifting device is not part of the invention.

The structural insulated panel according to the invention is sealed and hermetic. This type of assembly is only possible with extremely high-density materials like cement particle panel, and there are no structural elements that have elasticity, so the whole structure is precisely accurate and tight.

Both the first cement particle panel (1.1) and the second cement particle panel (1.2) are, for example, 10-28 mm thick. The thicknesses of the first cement - particle panel (1.1) and the second cement - particle panel (1.2) can be different. For example, the second cement - particle panel (1.2) is 12 mm thick, and the first cement - particle panel (1.1) is 18 mm thick, thus improving the condensation, vapor and sound insulation properties of the structural insulated panel.

The polystyrene foam layer (3) comprises graphite up to 7% of the total mass before the foam is blown. Additives improve the thermal insulation properties of polystyrene foam. The thermal conductivity coefficient of polystyrene foam is, for example, ≤ 0.031 W/mK, the compressive strength to 10% deformation is ≥ 100 kPa, the bending strength is ≥150 kPa. The thickness of polystyrene foam is, for example, 100 mm.

The location of the fire-resistant hose (7) in the structural insulated between the first cement - particles plate (1.1) and the second cement - particle plate (1.2) is formed in such way that between the fire-resistant hose (7) and at least the second cement - particle panels (1.2) would be part of the polystyrene foam layer (3). It is desirable that between the fire-resistant hose (7) also the first cement - particles panels (1.1) would be part of the polystyrene foam layer (3).

The method of manufacturing a structural insulated panel involves carrying out all assembly steps of the structural insulated panel in a factory using an assembly machine. The production method includes the first cement - particles gluing the panel (1.1) to the polystyrene foam layer (3) on one side using the first layer of polyurethane glue (2.1), the second layer of cement - particles gluing of panels (1.2) to the second side of the polystyrene foam layer (3), opposite to the first side, using a second layer of polyurethane glue (2.2), gluing of the natural stone finishing panel (4) to the second side of the cement - particles plates (1.2). Assembling the structural insulated panel may also include placing at least one spacer (5) between the ends of the structural insulated panel (5', 5") in the polystyrene foam layer (3) by gluing, prior to the polystyrene foam layer (3) by gluing the second cement - particle plate (1.2). Assembling the structural insulated panel may also include placing at least one insert (6) at the ends of the structural insulated panel (5', 5") in the polystyrene foam layer (3) by gluing, in front of the polystyrene foam layer (3) by gluing the second cement - particle plate (1.2).

First cement - particles panel (1.1), polystyrene foam (3), second cement - particles panel (1.2), polyurethane adhesive layers, stone finishing panel (4), at least one insert (5) placed between the ends of the structural insulated panel (5', 5"), if installed, and/or end inserts (6), if they are installed, they form a frameless construction of a structural insulated panel. A structural insulated panel does not have additional frame elements or a separate frame to which all or part of the structural insulated panel elements are attached.

The manufacturing method of the structural insulated panel includes forming the structural insulated panel according to predetermined dimensions as a finite building element, in example, an element whose dimensions or shape are not adapted to be adjusted during the construction of the building by cutting, drilling or otherwise mechanically affecting them.

Structural insulated panels are manufactured in a controlled environment, according to a documented quality control program. Production must have *an ETA* (*European Technical Assessment*) from *EOTA* (*European Organisation for Technical Approvals*), ISO 9001 standard and have a *LEAN* system implemented.

The production method of the structural insulated panel includes 95-98% of standard dimensions, such as 1200 x 2700mm and 1200 x 3000mm, cement - particles utilization of panels used in the production of structural insulated panel.

The steps of the method ensure the reduction of construction waste to 2% of materials, from the materials of standard dimensions used.

The method of manufacturing the structural insulated panel may also include placing at least one fire-resistant hose (7) for the electrical wire in the polystyrene foam layer (3). The method may also include forming cavities to accommodate trim elements, electrical wiring elements, plumbing elements in the first cement - particle structural insulated panel. in plate (1.1).

Structural insulated panels are installed on the base, such as the foundation of the building, a waterproofing membrane is placed on the foundation (grid) and an impregnated wooden panel is installed on top, separating the wood from the concrete, on which additional impregnated wooden panel (L1, L2) is installed. The bottom panel (L2) has width of the structural insulated panel and the top panel (L1) has width of the panel insert (3) to allow the panel to fit tightly and stay on the timber without contact with the concrete. The invention is mounted on a wooden frame with glue, and since everything is extremely precise and the weight of the panels is high, they must be mechanically clicked into place. For mentioned precision, this uses vacuum suction (VS) mounts to snap the panels into place or mechanically tighten them using vacuum suction (VS) mounts so there is no hammering through the panels to snap them into place.

After installing the panels and gluing them together at the same height, if necessary, additional panels of the same type are installed on the panels below. An additional layer of glue is applied to the upper surface of the polystyrene foam layer (3) of the lower structural insulated panel and the inner surfaces of the side walls of the U-shaped profile, and a continuous construction element (L1) is inserted and glued into the groove of the U-shaped profile, over the entire length of the U-shaped profile groove length. The thickness of said building element (L1), such as a wooden panel or other building material with similar or better mechanical properties, is the height of the walls of the U-shaped profile groove from the top surface of the polystyrene foam layer (3), forming a smooth surface. A second continuous construction element (L2), such as a panel made of wood or other construction material with similar or better mechanical properties, is glued to the flat surface formed in this way, for gluing an additional structural insulated panel on it, through a longitudinal construction element (L1) in the U-shaped profile groove formed, join with the edges of cement - particle panels (1.1, 1.2) to form a smooth surface in the lower part of the additional panel. The ends of the cement - particle panels (1.1, 1.2) and stone finishing panels (4) of the lower and upper panels are pressed together and brought together in such a way that the gaps between the said compressed ends are filled with polyurethane glue, the excess of which is removed by peeling off the protective films from the first cement - particles panel internal surfaces of panels (1.1) and stone finishing panels (4) which are external surface. The excess of polyurethane glue, after it has hardened, can be removed by scraping, if no protective film is used.

The use of structural insulated panels during the assembly of the building does not require additional membranes, tapes and mastics to ensure moisture and tightness.

The present invention minimizes any thermal bridging by incorporating materials that reduce or eliminate cold bridging without the use of cold-conducting materials such as metals in the construction.

Adhesive distribution control. When installing panels, when assembling / constructing a building, glue is used, the colour of which is not the same as the colour of the panel elements. It is preferable that the adhesive to be white, as panel finishes darker in colour such as grey and then the adhesive will be easily noticeable where it was being squeezed out of the gaps between the panels being joined. If the glue gets on the finishing surface where it shouldn't be, it can be removed by peeling off the protective PVC film on which the glue has hardened, or by cutting off the glue after it hardens and scrubbing off the remaining residue. Part of the volume of glue, for example, 5% of the total volume of used glue at the point of gluing between the two elements to be glued must "extrude" through the joints of the structural elements of insulated panels (1.1, 1.2, 4). This way you can see if enough glue has been used and if it has been pressed evenly everywhere, installed in place and there are no air gaps anywhere - gluing quality control. Full solidification of the glue requires at least 4 hours, so it is necessary to ensure that the panels stands firm in their position, for this, holders with vacuum suction cups (VS) are used, which hold the panels in place by pressing them against each other through the connecting elements of the vacuum suction holders, and allow them to be precisely pressed together with another

Although the description of the invention has set forth numerous characteristics and advantages, along with structural details and features of the invention, the description is presented as an exemplary embodiment of the invention. Changes may be made in the details, especially in the form, size and arrangement of the materials, without departing from the principles of the invention, in accordance with the most widely understood meanings of the terms used in the definitions.

## Claims

1. A structural insulated panel comprising a first panel, a second panel, and a layer of thermal insulation material interposed there between, where adhesive layers are disposed between the first panel and the layer of thermal insulation material and between the second panel and the thermal insulation material, **characterized in that** the structural insulated panel is airtight and hermetic construction element that cannot be modified on the construction site,
where the first panel is a cement - particle panel (1.1), the second panel is a cement - particle panel (1.2), and the thermal insulation insert is a polystyrene foam layer (3) with graphite proportion in its consistency,
where the second cement - particle panel (1.2) additionally comprises a natural stone finish panel (4), which comprises a first surface (4.1) for gluing to the second cement - particle panel (1.2) and a second surface (4.2) for the vacuum suction devices of lifting devices (VS) to attach,
where the adhesive layers are polyurethane adhesive layers comprising a first polyurethane adhesive layer (2.1), a second polyurethane adhesive layer (2.2) and a third polyurethane adhesive layer (2.3), where between each cement - particle panel (1.1, 1.2) and polystyrene foam layer (3), a polyurethane adhesive layer (2.1, 2.2) is distributed over the entire contact between each cement - particle panel (1.1, 1.2) and polystyrene foam layer (3) in the area of the surfaces, and between the second cement - particle panel (1.2) and the natural stone finishing panel (4), a layer of polyurethane glue (2.3) is distributed over the entire area of contact between the second cement - particle panel (1.2) and the natural stone finishing panel (4),
where upper surface of the polystyrene foam layer (3) with the ends of the cement - particle panels (1.1, 1.2) forms a U-shaped profile, and the lower surface of the polystyrene foam layer (3) with the ends of the cement - particle panels (1.1, 1.2) also forms a U-shape profile, which include an adhesive layer on the upper and lower surfaces of the polystyrene foam layer (3), which are respectively the lower and lower parts of the upper U-shaped profile,
where at each end (5', 5") a U-shaped profile is formed from the surface of the polystyrene foam layer (3) and the ends of cement - particle panels (1.1, 1.2), where the surface of the polystyrene foam layer (3) is covered with polyurethane glue.

2. Structural insulated panel according to claim 1, **characterized in that** further comprises at least one insert (5) located between the ends (5', 5") of the structural insulated panel.

3. A structural insulated panel according to claim 1 or 2, **characterized in that** comprises end inserts (6) located at the ends (5', 5") of the structural insulated panel.

4. Structural insulated panel according to claim 2 or 3, **characterized in that** said at least one insert (5) comprises a first panel (5.1), a second panel (5.2), a third panel (5.3), a fourth panel (5.4) and a core (5.5), where said panels (5.1, 5.2, 5.3, 5.4) are glued to each other at edges, where said panels (5.1, 5.2, 5.3, 5.4) are cement - particle panels enclosing a core (5.5) of polystyrene foam, where said at least one insert (5) between the first cement - particle panel (1.1) of the structural insulated panel and the first panel (5.1) of the insert comprises a layer of polyurethane adhesive that covers the entire surface of interaction between the first cement - particle panel (1.1) and the first panel (5.1) of the insert the area where said at least one insert (5) between the second cement - particle panel (1.2) of the structural insulated panel and the third panel (5.3) of the insert comprises a layer of polyurethane adhesive.

5. A structural insulated panel according to claim 3 or 4, **characterized in that** each said end insert (6) includes a first panel (6.1), a second panel (6.2), a third panel (6.3), a fourth panel (6.4) and a core (6.5 ), where said panels (6.1, 6.2, 6.3, 6.4) are glued together at the edges, where said panels (6.1, 6.2, 6.3, 6.4) are cement - particle panels enclosing a core (6.5) of polystyrene foam, where each said the back insert (6) between the first cement - particle panel (1.1) of the structural insulated panel and the first panel (6.1) of the back insert includes a layer of polyurethane adhesive, between the second cement - particle panel (1.2) of the structural insulated panel and the third panel (6.3) of the back insert comprises a polyurethane adhesive layer.

6. A structural insulated panel according to any one of the preceding claims, **characterized in that** said second surface (4.2) comprises a protective peelable PVC film and a first cement - particle panel (1.1) on a surface opposite to the surface to which the polystyrene foam layer (3) is adhered also comprises a protective peelable PVC film.

7. A method of manufacturing a structural insulated panel according to any one of the preceding claims, comprising gluing a first panel to a layer of thermal insulation material and gluing a second panel to a layer of thermal insulation material, **characterized in that** a frameless structure is made from a first cement - particles panel (1.1), a polystyrene foam layer (3), a second cement - particles panel (1.2), polyurethane adhesive layers and a stone finishing panel (4),
where the manufacturing method comprises gluing the first cement - particles panel (1.1) to first side of the polystyrene foam layer (3) on one side using the first layer of polyurethane glue (2.1), gluing the second cement - particles panel (1.2) to second side of the polystyrene foam layer (3), opposite to the first side, using a second layer of polyurethane glue (2.2), and gluing the natural stone finishing panel (4) to the second cement - particle panel (1.2),
where gluing of all the elements of the structural insulated panel is done by a machine, where the glue is distributed evenly over the surfaces, pressing each element to be glued with equal force to each other, over the entire surface pressed by the elements to be glued,
where the structural insulated panel is manufactured to predetermined dimensions as a sealed and hermetic finished building element,
where the structural insulated panel is manufactured in a controlled environment, according to the ISO 9001 standard and *the LEAN* system.

8. A method according to claim 7, wherein the method also comprises placing at least one insert (5) between ends (5', 5") of the structural insulated panel in the polystyrene foam layer (3) by gluing, and placing end inserts (6) in the structural at the ends (5', 5") of the insulated panel by gluing, before gluing the second cement - particle panel (1.2) to the polystyrene foam layer (3).

9. The method according to claim 7 or 8, wherein the method of manufacturing the structural insulated panel comprises use of 95-98% of each cement - particle panel of standard dimensions.

10. Use of structural insulated panels according to any one of claims 1-6 for building buildings, comprising
installation of the structural insulated panels on a wooden frame by mechanically pressing the structural insulated panels into place with glue and mechanically tightening the structural insulated panels using holders with vacuum suction cups (VS),
installation of structural insulated panels on a foundation of a building by placing a waterproofing membrane on which an impregnated wooden panel is installed, on which additional impregnated wooden panels (L1, L2) are installed, where lower panel (L2) has width of the structural insulated panel, and upper panel Ll1) has width of the polystyrene foam panel layer (3),
where the ends of the lower and upper structural insulated panels cement - particle panels (1.1, 1.2) and the stone finishing panel (4) are compressed and brought together in such a way that gaps between the aforementioned compressed ends are filled with polyurethane glue, the excess of which is removed after the glue has hardened.
